# EUROPÄISCHE PATENTSCHRIFT

(11) **EP 3 222 499 B1**
(45) Veröffentlichungstag und Bekanntmachung des Hinweises auf die Patenterteilung: **26.02.2020**
(21) Anmeldenummer: 16162367.3
(22) Anmeldetag: 24.03.2016
(51) Int. Cl.: B62D 21/18, B62D 55/06, B60F 3/00

(54) **ZIVILES KETTENFAHRZEUG**
CIVIL TRACKED VEHICLE
VÉHICULE À CHENILLES CIVIL

(43) Veröffentlichungstag der Anmeldung: 27.09.2017
(73) Patentinhaber: Kässbohrer Geländefahrzeug AG, 88471 Laupheim (DE)
(72) Erfinder: Junginger, Bernd, 89134 Blaustein-Bermaringen (DE); Ramic, Muhamed, 89081 Ulm (DE); Kuhn, Michael, 88480 Achstetten (DE); Kotiev, Georgii, 111394 Moskau (RU); Zhirnyy, Roman, 123182 Moskau (RU)
(74) Vertreter: Patentanwälte Ruff, Wilhelm, Beier, Dauster & Partner mbB

(56) Entgegenhaltungen:
- WO-A1-02/12045
- WO-A1-2013/174357
- DE-A1-102013 109 500
- US-A- 2 404 492
- US-A- 3 760 763
- US-A- 3 776 325
- US-A- 3 930 458
- US-A1- 2010 062 664
- US-A1- 2013 078 877
- US-B1- 8 454 399
- US-B1- 8 808 042

## Beschreibung

Die Erfindung betrifft ein ziviles Kettenfahrzeug mit einem Tragrahmen, sowie mit einem Kettenfahrwerk, das auf gegenüberliegenden Seiten des Tragrahmens zwei Kettenlaufwerke aufweist, mit einer Fahrantriebseinheit, die von dem Tragrahmen getragen ist, sowie mit einem Fahrerhaus, das auf dem Tragrahmen angeordnet ist, wobei der Tragrahmen als wasserdichte Tragwanne gestaltet ist, in der die Fahrantriebseinheit untergebracht ist.

Aus der US 3 776 325 A ist ein derartiges ziviles Kettenfahrzeug bereits bekannt. Das bekannte Kettenfahrzeug weist eine wasserdichte Tragwanne auf, in der ein Antrieb für das Kettenfahrzeug untergebracht ist.

Ein weiteres ziviles Kettenfahrzeug ist durch den Prospekt "PowerBully Track Carriers" aus 03/2015 der Anmelderin allgemein bekannt. Das bekannte zivile Kettenfahrzeug wird für den Bau und die Wartung von Pipelines, von Strom- und Telefonleitungen und für ähnliche Zwecke eingesetzt. Das Kettenfahrzeug weist einen Tragrahmen auf, dem ein Kettenfahrwerk zugeordnet ist. Das Kettenfahrwerk ist auf gegenüberliegenden Seiten des Tragrahmens mit jeweils einem Kettenlaufwerk versehen, das sich aus einer umlaufenden Kettenanordnung, einem Antriebsrad, einem Spannrad und mehreren Laufrädern zusammensetzt. Das Antriebsrad jedes Kettenlaufwerks ist über eine Fahrantriebseinheit antreibbar, die hydraulisch ausgeführt ist. Die hydraulische Fahrantriebseinheit wird durch eine hydraulische Verstellpumpe gespeist, die durch einen Verbrennungsmotor in Form eines Dieselmotors angetrieben ist. In einem Frontbereich des Tragrahmens ist auf dem Tragrahmen ein Fahrerhaus angeordnet, das einen Fahrersitzplatz aufweist, von dem aus Fahr- und Arbeitsfunktionen des Kettenfahrzeugs gesteuert werden.

Aufgabe der Erfindung ist es, ein ziviles Kettenfahrzeug der eingangs genannten Art zu schaffen, das gegenüber dem Stand der Technik erweiterte Einsatzmöglichkeiten aufweist.

Diese Aufgabe wird dadurch gelöst, dass die Tragwanne wenigstens zwei die Tragwanne quer durchsetzende Rohrprofile aufweist, in denen durchgängige Achsen von Laufradanordnungen der beiden Kettenlaufwerke gelagert sind. Durch die Gestaltung des Tragrahmens als wasserdichte Tragwanne kann das Kettenfahrzeug auch in sehr feuchten Landschaftsgebieten eingesetzt werden, ohne dass Fahrfunktionen des Kettenfahrzeugs beeinträchtigt sind. Denn die Tragwanne verhindert, dass Wasser von unten oder von einer Seite her zu entsprechenden Fahrzeugkomponenten von Fahr- oder Arbeitsfunktionen dringen und die Funktion solcher Komponenten beeinträchtigen kann. Zudem kann das erfindungsgemäße Kettenfahrzeug schwimmfähig ausgeführt werden. Dies ist insbesondere vorteilhaft, um von Schneeschmelze überflutete Gebiete befahren und bearbeiten zu können. Die erfindungsgemäße Lösung eignet sich insbesondere für zivile Kettenfahrzeuge, die zum Bau und zur Pflege von Pipelines, zum Bau und zur Wartung von Strom- oder Telefonleitungen und für ähnliche Arbeitszwecke eingesetzt werden. Das erfindungsgemäße Kettenfahrzeug eignet sich daher als Arbeitsfahrzeug, um unterschiedliche Arbeiten in unzugänglichem Gelände durchführen zu können, wie insbesondere für den Bau oder die Wartung von Pipelines, für den Bau oder die Wartung von Stromleitungen oder für den Bau und die Wartung von Telefonleitungen. Hierzu ist das Kettenfahrzeug mit unterschiedlichen Aufbauten versehen, die insbesondere auf einer Tragfläche hinter dem Fahrerhaus aufgebaut sein können. Die Tragfläche erstreckt sich quer über die Tragwanne und ist fest mit der Tragwanne verbunden.

Erfindungsgemäß weist die Tragwanne wenigstens zwei die Tragwanne quer durchsetzende Rohrprofile auf, in denen durchgängige Achsen von Laufradanordnungen der beiden Kettenlaufwerke gelagert sind. Dadurch, dass die Rohrprofile die Tragwanne quer durchsetzen, ergeben sich durchgeführte Laufradachsen für die Laufradanordnungen. Hierdurch ist gewährleistet, dass die Tragwanne auch im Bereich der Durchführungen wasserdicht geschlossen bleibt.

In Ausgestaltung der Erfindung ist wenigstens ein gemeinsames Trägerhohlprofil zur Integration von Antriebskomponenten von Antriebsrädern der beiden Kettenlaufwerke vorgesehen, das sich über eine Breite der Tragwanne erstreckt und gegenüberliegende Seitenwandungen der Tragwanne durchsetzt. Antriebskomponenten sind insbesondere Lagerungen und Hydraulikmotoren für die Antriebsräder. Dadurch ist es ermöglicht, entsprechende Antriebsfunktionskomponenten der Fahrantriebseinheit in dem Trägerhohlprofil wasserdicht aufzunehmen. Dadurch, dass auch das Trägerhohlprofil durch die Seitenwandungen der Tragwanne hindurchgeführt ist, ist eine vollständige Dichtheit der Tragwanne auch im Bereich dieser Durchführungen ermöglicht.

In weiterer Ausgestaltung der Erfindung sind gegenüberliegende Seitenwandungen der Tragwanne mit Durchtritten versehen, durch die die Rohrprofile oder das gemeinsame Trägerhohlprofil hindurchragen, und die Durchtritte sind an ihren umlaufenden Randbereichen durchgängig und dicht mit umlaufenden Außenmantelbereichen der Rohrprofile oder des Trägerhohlprofils verschweißt. Sowohl die Trägerwanne als auch die Rohrprofile und das Trägerhohlprofil bestehen aus Stahllegierungen, so dass umlaufend dichte Verschweißungen ermöglicht sind.

In weiterer Ausgestaltung der Erfindung ist an einem front- und/oder heckseitigen Stirnendbereich der Tragwanne wenigstens ein Schiffsantrieb vorgesehen. Der wenigstens eine Schiffsantrieb kann eine Schiffsschraube aufweisen. Alternativ kann ein Wasserstrahlantrieb vorgesehen sein. Vorzugsweise wird der Schiffsantrieb durch einen Außenborder realisiert. Durch den wenigstens einen Schiffsantrieb ist das Kettenfahrzeug bei entsprechender Schwimmfunktion als Fahrzeug zu Wasser betreibbar.

In weiterer Ausgestaltung der Erfindung ist in der Tragwanne wenigstens eine Lenzpumpeneinrichtung integriert. Die wenigstens eine Lenzpumpeneinrichtung gewährleistet, dass in die Tragwanne eintretendes Wasser entfernt werden kann.

In weiterer Ausgestaltung der Erfindung ist eine Schwimmfunktionsstruktur lösbar mit der Tragwanne verbunden, die mehrere, über eine Länge und eine Breite der Schwimmfunktionsstruktur verteilt angeordnete Auftriebskörper aufweist. Die Auftriebskörper können nach Art von Schwimmpontons ausgeführt sein. Die Auftriebskörper sind vorzugsweise mit Luft oder Gas gefüllte Hohlkörper oder geeignete formstabile Schaumkörper.

In weiterer Ausgestaltung der Erfindung ist die Schwimmfunktionsstruktur auf eine Oberseite der Tragwanne aufgesetzt. Die Schwimmfunktionsstruktur ist lösbar mit der Tragwanne verbunden. Vorzugsweise ist die Schwimmfunktionsstruktur über Schraubverbindungen im Bereich der Oberseite der Tragwanne befestigt.

In weiterer Ausgestaltung der Erfindung weist die Schwimmfunktionsstruktur einen Strukturrahmen auf, an dem die Auftriebskörper befestigt sind. Die Schwimmfunktionsstruktur aus Strukturrahmen und Auftriebskörpern kann entweder als vormontierte Baueinheit an dem Kettenfahrzeug befestigt werden oder aber am Kettenfahrzeug montiert werden, indem zunächst der Strukturrahmen vorzugsweise von oben her an der Tragwanne befestigt wird und anschließend die Auftriebskörper an dem Strukturrahmen befestigt werden.

In weiterer Ausgestaltung der Erfindung flankieren die Auftriebskörper die Kettenlaufwerke außenseitig. In weiterer Ausgestaltung sind die Auftriebskörper zumindest abschnittsweise quer über die Kettenlaufwerke erstreckt. Die Auftriebskörper sind derart angeordnet, dass eine Oberkante der Tragwanne des Kettenfahrzeugs sich im schwimmenden Zustand des Kettenfahrzeugs noch oberhalb einer Wasserlinie befindet. Die Verteilung der Auftriebskörper erfolgt abhängig von einem Fahrzeugschwerpunkt, um in einem Schwimmzustand ein paralleles Schwimmen des Kraftfahrzeugs relativ zu einer Wasseroberfläche zu ermöglichen.

In weiterer Ausgestaltung der Erfindung ist an der Tragwanne frontseitig eine Bergewinde vorgesehen. Die Bergewinde verbessert die Manövrierfähigkeit des Kettenfahrzeugs in unwegsamem Gelände, insbesondere in Gelände, in dem das Kettenfahrzeug auf seine Schwimmfähigkeit angewiesen ist.

In weiterer Ausgestaltung der Erfindung sind einem Fahrersitzplatz in dem Fahrerhaus Steuerelemente zur Steuerung des wenigstens einen Schiffsantriebs zugeordnet. Dadurch kann ein Fahrer des Kettenfahrzeugs auch das schwimmende Kettenfahrzeug vom Fahrerhaus aus steuern. Vorzugsweise sind die Steuerelemente als Steuerhebel ausgeführt, die im Bereich eines Fahrersitzes, vorteilhaft im Bereich einer Armlehne, angeordnet sind. Das Fahrerhaus ist vorzugsweise in seiner Höhe relativ zur Tragwanne verstellbar angeordnet, um auch bei montierter Schwimmfunktionsstruktur durch entsprechendes Nachobenverlagern des Fahrerhauses noch ein Öffnen und Schließen einer Fahrerhaustür zu ermöglichen.

In weiterer Ausgestaltung der Erfindung ist die Tragwanne mit mehreren, in Querrichtung erstreckten Schottwänden versehen. Die Schottwände tragen zur Versteifung der Tragwanne bei. Die Schottwände können sich über einen Teil der Höhe der Tragwanne oder über eine volle Höhe der Tragwanne erstrecken.

In weiterer Ausgestaltung der Erfindung sind die Laufräder jedes Kettenlaufwerks paarweise an Zwillingslenkern gelagert, deren Lenkerhebel relativ zu einer gemeinsamen Laufradachse unterschiedlich lang ausgeführt sind. Hierdurch ergibt sich eine asymmetrische Zwillingslenkeranordnung, die einen Federungskomfort jedes Kettenlaufwerks in einem Fahrbetrieb verbessert. Die Lenkerhebel der Zwillingslenker sind starr zueinander angeordnet. An jedem Lenkerhebel ist jeweils ein Laufrad drehbar gelagert. Jeder Zwillingslenker ist relativ zu der Tragwanne um eine in Fahrzeugquerrichtung erstreckte Schwenkachse schwenkbeweglich gelagert nach Art einer Wippe oder eines Pendels.

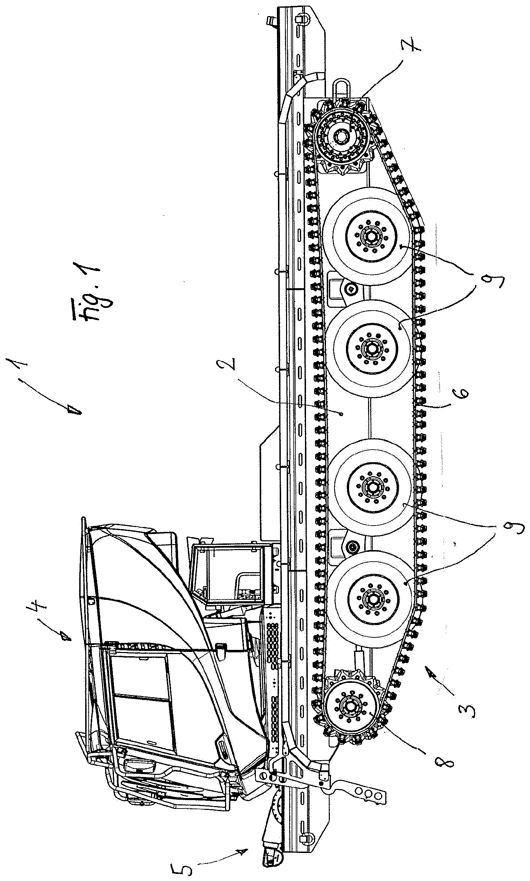

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.Fig. 1 zeigt in einer Seitenansicht eine Ausführungsform eines erfindungsgemäßen Kettenfahrzeugs,
- Fig. 2: in einer Seitenansicht das Kettenfahrzeug nach Fig. 1 mit einer zusätzlichen Schwimmfunktionsstruktur,
- Fig. 3: in einer Frontansicht das Kettenfahrzeug nach Fig. 2,
- Fig. 4: das Kettenfahrzeug nach den Fig. 2 und 3 in einer Heckansicht,
- Fig. 5: in perspektivischer Darstellung eine Armlehne eines Fahrersitzes eines Fahrerhauses des Kettenfahrzeugs nach den Fig. 1 bis 4,
- Fig. 6: das Kettenfahrzeug nach den Fig. 2 bis 4 in einer Draufsicht,
- Fig. 7: einen Fahrwerksbereich des Kettenfahrzeugs nach den Fig. 1 bis 6,
- Fig. 8: den Fahrwerksbereich nach Fig. 7 in einer Draufsicht,
- Fig. 9: den Fahrwerksbereich nach Fig. 8 in einer Frontansicht,
- Fig. 10: eine Längsschnittdarstellung des Fahrwerksbereichs nach den Fig. 7 bis 9 entlang einer Schnittlinie X-X,
- Fig. 11: eine Tragwanne des Fahrwerksbereichs nach den Fig. 7 bis 10 in einer Seitenansicht,
- Fig. 12: einen Schnitt entlang der Schnittlinie XII-XII durch die Tragwanne nach Fig. 11,
- Fig. 13: einen Schnitt entlang der Schnittlinie XIII-XIII durch die Tragwanne gemäß Fig. 11,
- Fig. 14: einen Schnitt entlang der Schnittlinie XIV-XIV durch die Tragwanne gemäß Fig. 11,
- Fig. 15: eine Draufsicht auf die Tragwanne nach den Fig. 11 bis 14 und
- Fig. 16: einen Längsschnitt durch das Kettenfahrzeug mit Schwimmfunktionsstruktur gemäß Fig. 2 bis 4.

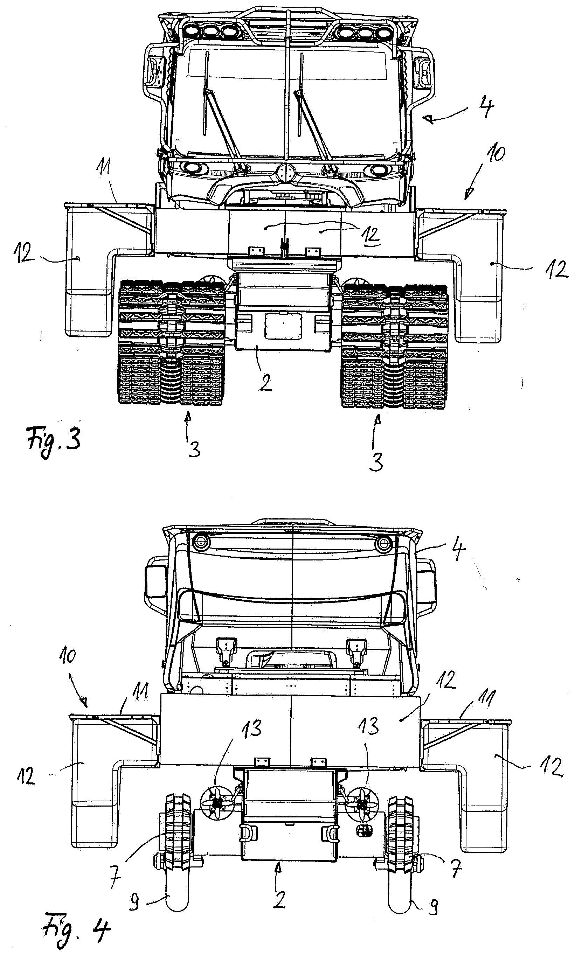

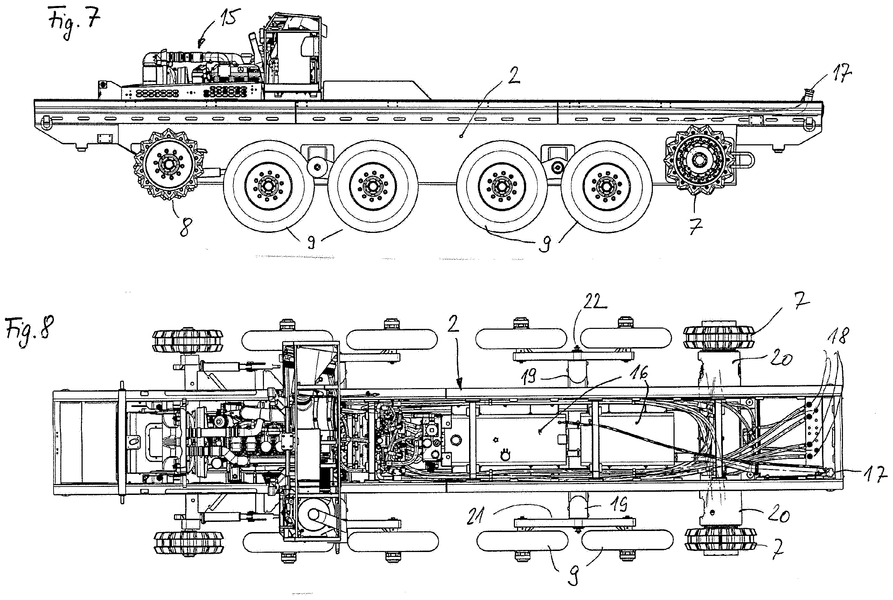

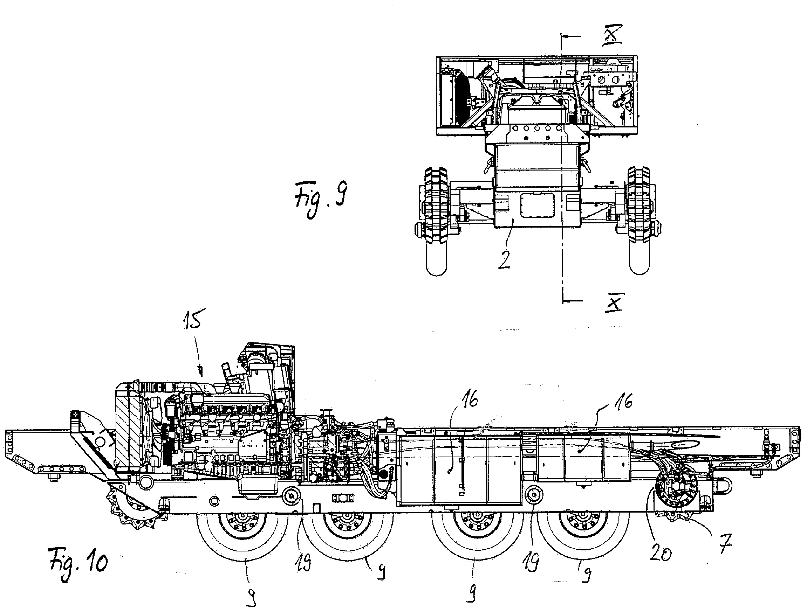

Ein Kettenfahrzeug 1 nach den Fig. 1 bis 16 weist einen Tragrahmen 2 auf, der als nach oben offene, zu gegenüberliegenden Seiten sowie nach vorne, nach hinten und nach unten jedoch wasserdicht geschlossene Tragwanne gestaltet ist. Die Tragwanne 2 besteht aus Stahl. Das Kettenfahrzeug 1 weist ein Kettenfahrwerk auf, das auf gegenüberliegenden Längsseiten der Tragwanne 2 jeweils ein Kettenlaufwerk 3 umfasst. Die beiden einander relativ zur Tragwanne 2 gegenüberliegenden Kettenlaufwerke 3 sind identisch zueinander aufgebaut und dabei spiegelsymmetrisch zu einer vertikalen Fahrzeugmittellängsebene ausgeführt. Jedes Kettenlaufwerk 3 weist eine umlaufende Kettenanordnung 6 auf, die - in normaler Fahrtrichtung des Kettenfahrzeugs 1 gesehen - frontseitig im Bereich eines Spannrads 8 sowie rückseitig im Bereich eines Antriebsrads 7 (auch Turasrad genannt) umgelenkt ist. Die Kettenanordnung 6 wird zudem über ihre Länge über insgesamt vier Laufräder 9 gestützt. Jeweils zwei Laufräder 9 sind zu einem Laufradpaar zusammengefasst, das über jeweils einen Zwillingslenker 21 schwenkbeweglich federnd gelagert ist. Der Zwillingslenker 21 ist um eine in Fahrzeugquerrichtung erstreckte Laufradachse 22 in einem Rohrprofil 19 drehbar gelagert. Der Zwillingslenker 21 ist nach Art einer Doppelschwinge ausgeführt, wobei ein Lenkerhebel der Doppelschwinge nach vorne abragt und der andere Lenkerhebel im Wesentlichen entgegengesetzt nach hinten abragt. Die beiden Lenkerhebel des Zwillingslenkers 21 sind einstückig miteinander verbunden. Beide Lenkerhebel ragen relativ zu der nicht näher bezeichneten Laufradachse 22 in dem Rohrprofil 19 schräg nach unten sowie nach vorne bzw. nach hinten ab. Jedes Laufrad 9 ist an einem freien Endbereich des jeweiligen Lenkerhebels um eine in Fahrzeugquerrichtung erstreckte Drehachse drehbar an dem Zwillingslenker 21 gelagert. Anhand der Fig. 1 sowie der Fig. 7 und 8 ist erkennbar, dass jeweils ein Lenkerhebel geringfügig länger ausgeführt ist als der andere Lenkerhebel, der entgegengesetzt abragt. Die Zwillingslenker 21 sind demzufolge geringfügig asymmetrisch gestaltet. Jedes der beiden Trägerhohlprofile 19 ist massiv aus Stahl hergestellt und durchsetzt die Trägerwanne 2 an ihren gegenüberliegenden Seitenwandungen. Anhand der Fig. 8 sowie 12, 13 und 15 ist erkennbar, dass das Rohrprofil 19 durch die gegenüberliegenden Seitenwandungen der Trägerwanne 2 hindurch und jeweils über die entsprechende Seitenwandung nach außen abragt, und dass die entsprechenden Zwillingslenker 21 jeweils außen an gegenüberliegenden Stirnseiten des jeweiligen Trägerhohlprofils 19 angeordnet sind. Die Seitenwandungen der Trägerwanne 2 weisen für die Durchführung der Trägerhohlprofile 19 Durchtritte auf, durch die das jeweilige Rohrprofil 19 hindurchragt. Ein Randbereich des jeweiligen Durchtritts ist mit einem Außenmantel des Trägerhohlprofils 19 im Bereich des Durchtritts umlaufend dicht verschweißt mittels entsprechend durchgängig umlaufend gelegter Schweißraupen. Die an den gegenüberliegenden Stirnseiten des jeweiligen Trägerhohlprofils 19 angeordneten Zwillingslenker 21, die jeweils zwei Laufräder 9 tragen, sind mittels zueinander koaxialer Laufradachsen 22 in dem Rohrprofil 19 drehbar gelagert. Zudem sind in dem Rohrprofil 19 Federeinrichtungen vorgesehen, die Federkräfte auf die Zwillingslenker 21 bei entsprechender Verdrehung um die Laufradachse 22 erzeugen, sobald die Zwillingslenker 21 aus einer Ruhelage, wie sie in Fig. 1 dargestellt ist, entsprechend ausgelenkt werden. Die Federeinrichtungen können durch Federdrehstäbe oder ähnliche mechanische, pneumatische oder hydraulische Federeinrichtungen gebildet sein. Gegenüberliegende Stirnseiten des jeweiligen Trägerhohlprofils 19 sind im Bereich der Lagerungen der Zwillingslenker 21 wasserdicht geschlossen, um einen Wassereintritt in das Rohrprofil 19 im Bereich der stirnseitigen Lagerflächen zu vermeiden. Das Rohrprofil 19 ist im Übrigen als geschlossenes Hohlprofil ausgeführt, um neben einer hohen Stabilität auch eine gute Wasserdichtheit erzielen zu können.

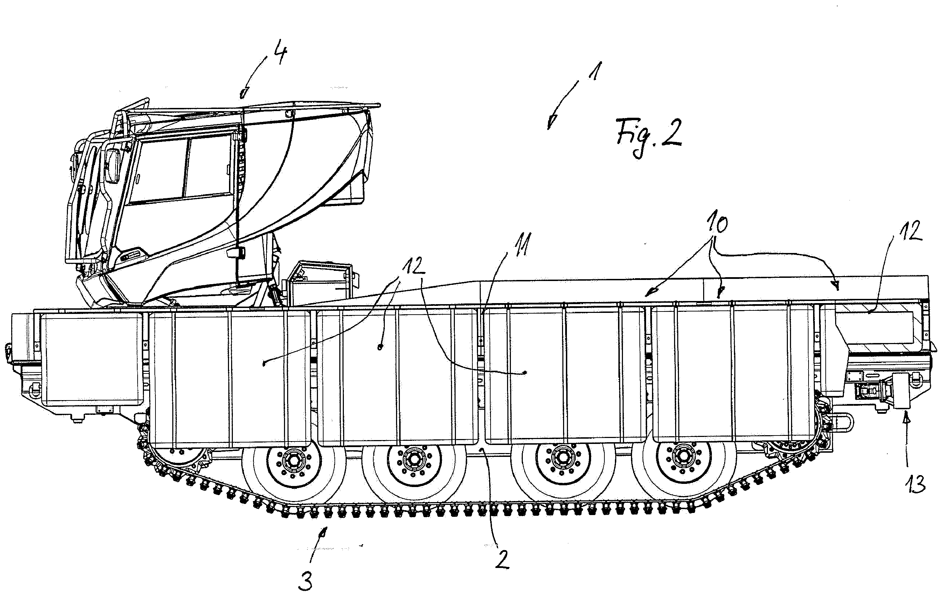

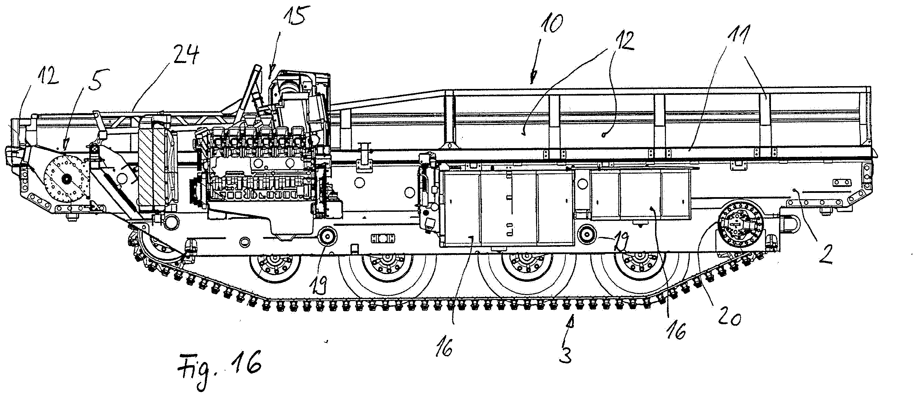

Auf der Trägerwanne 2 ist in einem vorderen Bereich der Trägerwanne 2 ein Fahrerhaus 4 befestigt. Vor dem Fahrerhaus 4 und damit an einem frontseitigen Stirnendbereich der Trägerwanne 2 ist zudem eine Bergewinde 5 montiert. Das Fahrerhaus 4 ist mit einem Fahrerplatz versehen, von dem aus Fahrfunktionen sowie Zusatzfunktionen von Arbeitsgeräten des Kettenfahrzeugs 1 gesteuert werden können. Das Fahrerhaus 4 ist hinter dem Fahrerplatz in nicht näher dargestellter Weise mit einem Kabinenbereich versehen, der einen Schlafplatz aufweist. Der Kabinenbereich ist zusätzlich isoliert, um ein ausreichendes Komfortgefühl für den Schlafplatz zu ermöglichen. Dem Kabinenbereich sind auch Staufächer sowie eine Beleuchtung zugeordnet. Das gesamte Fahrerhaus 4 ist auf einem Zwischenrahmen 24 befestigt, der anhand der Fig. 16 erkennbar ist. Der Zwischenrahmen 24 ist relativ zu der Tragwanne 2 in Hochrichtung zwischen einer Tiefstellung und einer Hochstellung verlagerbar und auf der Tragwanne 2 gehalten. Eine Verlagerung des Zwischenrahmens 24 und damit auch des gesamten Fahrerhauses 4 in Hochrichtung erfolgt abhängig davon, ob das Kettenfahrzeug 1 gemäß Fig. 1 oder gemäß den Fig. 2 bis 4 mit einer zusätzlichen Schwimmfunktionsstruktur 10 betrieben wird. Bei Vorsehen einer Schwimmfunktionsstruktur 10 wird das Fahrerhaus 4 mittels des Zwischenrahmens 24 und geeigneter Antriebs- und Stellmittel in die Hochstellung nach oben verlagert, um auch nach Anbau der Schwimmfunktionsstruktur 10 noch ein Öffnen einer Fahrerhaustür zu ermöglichen, damit ein Fahrer zum Fahrerplatz gelangen oder aus dem Fahrerhaus 4 austreten kann. Die Hochstellung des Fahrerhauses 4 ist anhand der Fig. 2 erkennbar. Die Tiefstellung des Fahrerhauses 4 ist der Fig. 1 zu entnehmen.

Das Kettenfahrzeug 1 kann schwimmfähig gestaltet werden durch den Anbau einer Schwimmfunktionsstruktur 10. Hierzu ist das Fahrerhaus 4 in seine Hochstellung verlagert. Die Schwimmfunktionsstruktur 10 weist einen Strukturrahmen 11 auf, der von oben her auf der Tragwanne 2 mithilfe einer Vielzahl von Schraubverbindungen befestigt wird. Der Strukturrahmen 11 besteht aus einer Vielzahl von Metallprofilen, die durch Verschweißung oder andere Verbindungsarten zu dem Strukturrahmen 11 miteinander verbunden sind. An dem Strukturrahmen 11 ist eine Vielzahl von Auftriebskörpern 12 befestigt, die als mit Luft gefüllte Hohlkörper gebildet sind. Die Auftriebskörper 12 bestehen aus einem schlagzähen Kunststoff. Die Auftriebskörper 12 erstrecken sich zum einen quer über eine Breite des Kettenfahrzeugs 1 oberhalb der Tragwanne 2. Zum anderen erstrecken sie sich über die Kettenlaufwerke 3 nach außen sowie seitlich außerhalb des jeweiligen Kettenlaufwerks 3 nach unten, so dass das jeweilige Kettenlaufwerk 3 etwa zur Hälfte von entsprechenden Auftriebskörpern 12 verdeckt ist. Schließlich sind auch Auftriebskörper in einem Frontbereich der Tragwanne, d.h. vor dem jeweiligen Kettenlaufwerk 3, angeordnet. Die Auftriebskörper 12 erstrecken sich quer über die Breite des Kettenfahrzeugs 1 vor dem Fahrerhaus 4. Die Auftriebskörper 12 bilden Schwimmpontons. Dadurch, dass die Schwimmfunktionsstruktur 10 starr mit der Tragwanne 2 verbunden ist, ermöglichen die Auftriebskörper 12 eine Schwimmfähigkeit des Kettenfahrzeugs 1. Ein entsprechendes Auftriebsvolumen der Auftriebskörper 12 ist derart auf ein Gesamtgewicht des Kettenfahrzeugs 1 abgestimmt, dass das Kettenfahrzeug mit angebauter Schwimmfunktionsstruktur 10 zu Wasser schwimmen kann.

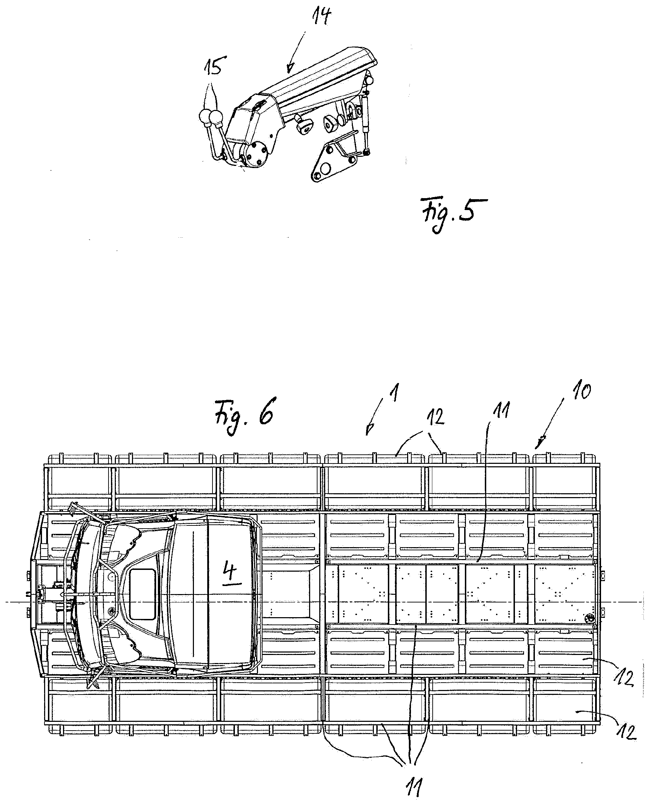

Um eine Fortbewegung des Kettenfahrzeugs 1 im Wasser zu ermöglichen, sind heckseitig an der Tragwanne 2 zwei Schiffsantriebe 13 befestigt, die als Außenborder mit jeweils einer Schiffsschraube gestaltet sind. Die Schiffsantriebe 13 werden hydraulisch betrieben, wobei die hydraulische Versorgung über die ohnehin vorhandene Fahrzeughydraulik erfolgt. Die beiden Schiffsantriebe 13 werden über zwei Steuerhebel 15 gesteuert, wobei jeweils ein Steuerhebel 15 (Fig. 5) jeweils einer Schiffsschraube 14 zugeordnet ist. Die beiden Steuerhebel 15 sind ergonomisch günstig im Bereich einer Vorderseite einer Armlehne 14 des Fahrerplatzes in dem Fahrerhaus 4 angeordnet. Ein auf dem Fahrerplatz befindlicher Fahrer kann daher in einfacher Weise mit einer Hand die Schiffsantriebe 13 steuern. Ergänzend kann die Bergewinde 5 eingesetzt werden, um das Kettenfahrzeug 1 aus dem Wasser wieder an Land zu bringen. Die Schwimmfunktionsstruktur 10 wird vorteilhaft in kalten Gebieten eingesetzt, sobald die Schneeschmelze begonnen hat. Denn dann können große Bereiche durch die Schneeschmelze überflutet sein, so dass das Kettenfahrzeug 1 teilweise nur noch im Schwimmbetrieb vorankommen kann.

Um zu vermeiden, dass die Tragwanne 2 des Kettenfahrzeugs 1 von oben her mit Wasser volllaufen kann, ist der Tragwanne 2 (siehe Fig. 8) eine Lenzpumpeneinrichtung 18 zugeordnet, die eine oder mehrere Lenzpumpen umfasst. Auch die Lenzpumpen der Lenzpumpeneinrichtung 18 sind hydraulisch betrieben.

Die Fahrzeughydraulik wird versorgt durch wenigstens eine zentrale, hydraulische Verstellpumpe, die durch einen Verbrennungsmotor 15 angetrieben wird. Der Verbrennungsmotor 15 ist ein großer Dieselmotor, vorzugsweise mit wenigstens 400 PS. Der Dieselmotor ist unterhalb des Fahrerhauses 4 in die Tragwanne 2 eingebaut und ragt teilweise über eine Oberseite der Tragwanne 2 hinaus (Fig. 7). Der Verbrennungsmotor 15 wird über zwei Kraftstofftanks 16 mit Dieselkraftstoff versorgt, die in Abstand hintereinander in der Tragwanne 2 angeordnet und dort befestigt sind. Die beiden Kraftstofftanks 16 sind in grundsätzlich bekannter Weise strömungstechnisch miteinander verbunden. Ein vorderer Kraftstofftank 16 weist etwa eine doppelte Füllmenge auf wie ein hinterer Kraftstofftank 16.

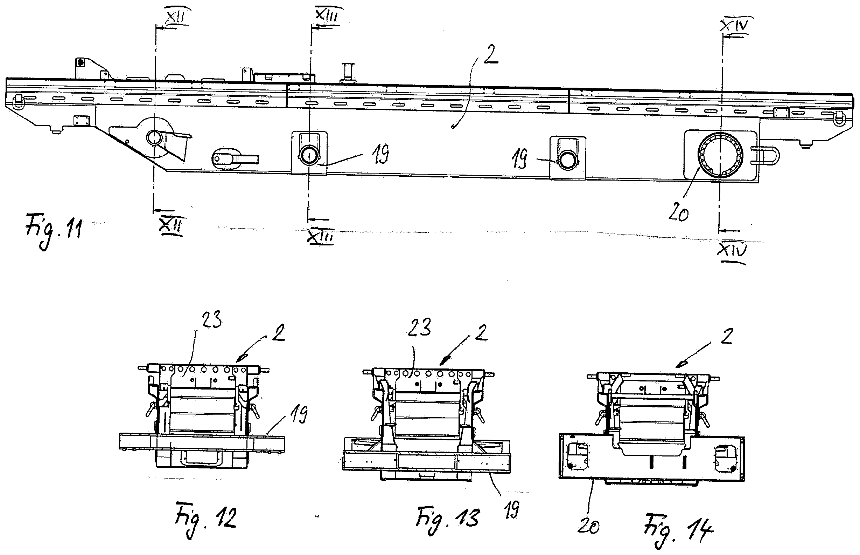

Heckseitig ist die Tragwanne 2 von einem in Querrichtung erstreckten Trägerhohlprofil 20 durchsetzt, in dem Kettenantriebskomponenten zum Antreiben der beiden Kettenlaufwerke 3 untergebracht sind. Das Trägerhohlprofil 20 ist, wie anhand der Fig. 11 und 14 erkennbar ist, analog der Rohrprofile 19 ebenfalls mit einem hohlzylindrischen Querschnitt versehen. Das Trägerhohlprofil 20 weist jedoch einen Durchmesser auf, der wesentlich größer ist als der Durchmesser der Rohrprofile 19. Wie anhand der Fig. 11 und 14 erkennbar ist, ist das Trägerhohlprofil 20 durch entsprechende Durchtritte in gegenüberliegenden Seitenwandungen der Trägerwanne 2 hindurch erstreckt, wobei das Trägerhohlprofil 20 im Bereich eines Außenmantels auf Höhe jedes Durchtritts umlaufend dicht mit dem entsprechenden Randbereich des jeweiligen Durchtritts der Seitenwandung der Tragwanne 2 verschweißt ist. Das Trägerhohlprofil 20 erstreckt sich parallel zu den Rohrprofilen 19. Im Inneren der Tragwanne 2 ist das Trägerhohlprofil nach oben offen. In dem Trägerhohlprofil 20 sind auf gegenüberliegenden Seiten Hydraulikmotoren zum Antrieb der Antriebsräder 7 integriert. Dabei ist jeweils ein Hydraulikmotor jeweils einem Antriebsrad 7 des jeweiligen Kettenlaufwerks 3 zugeordnet. Zudem sind in dem Trägerhohlprofil 20 entsprechende Hydraulikkomponenten zur Versorgung und Steuerung der Hydraulikmotoren untergebracht. Schließlich sind Lagerungen für die Antriebsräder in den gegenüberliegenden Seiten des Trägerhohlprofils 20 integriert. Der auf jeder Seite über die entsprechende Seitenwandung der Tragwanne 2 nach außen abragende Teilbereich des Trägerhohlprofils 20 ist abgedichtet, um einen Wassereintritt ins Innere der Tragwanne 2 und ins Innere des Trägerhohlprofils 20 zu verhindern.

Heckseitig im Bereich der Lenzpumpeneinrichtung 18 ist ein Kraftstoffeinfüllstutzen 17 vorgesehen, der mit den Kraftstofftanks 16 verbunden ist.

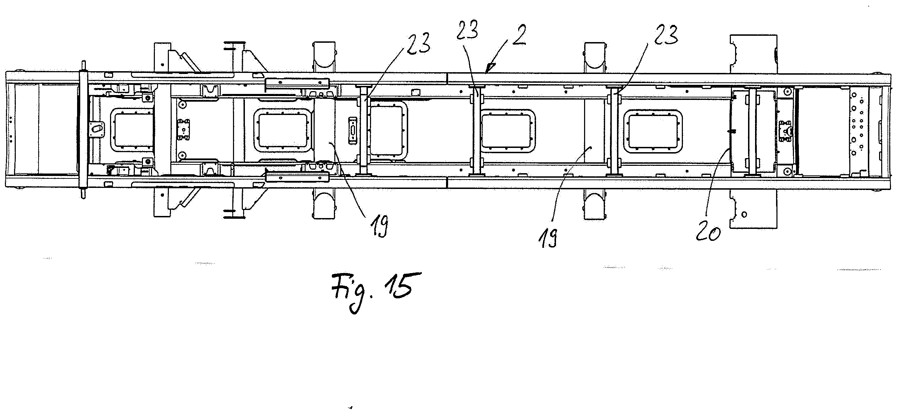

Wie anhand der Fig. 15 erkennbar ist, ist die Tragwanne 2 über ihre Länge mittels mehrerer Schottwände 23 versteift, die sich über die Breite der Tragwanne 2 zwischen den gegenüberliegenden Seitenwandungen erstrecken und fest mit der Tragwanne 2 verbunden sind. Die Schottwände 23 erstrecken sich von einer Oberseite der Tragwanne 2 ausgehend über einen Teil der Höhe der Tragwanne 2 und können mit Durchtritten oder anderen Halte- oder Befestigungsfunktionen versehen sein, um Teile der Schwimmfunktionsstruktur 10 oder Hydraulikkomponenten der Fahrzeughydraulik oder Hydraulik-, Strom- oder Steuerleitungen zu haltern.

## Patentansprüche

1. Ziviles Kettenfahrzeug mit einem Tragrahmen, sowie mit einem Kettenfahrwerk, das auf gegenüberliegenden Seiten des Tragrahmens zwei Kettenlaufwerke (3) aufweist, mit einer Fahrantriebseinheit, die von dem Tragrahmen getragen ist, sowie mit einem Fahrerhaus (4), das auf dem Tragrahmen angeordnet ist, wobei der Tragrahmen als wasserdichte Tragwanne (2) gestaltet ist, in der die Fahrantriebseinheit untergebracht ist, **dadurch gekennzeichnet, dass** die Tragwanne (2) wenigstens zwei die Tragwanne (2) quer durchsetzende Rohrprofile (19) aufweist, in denen durchgängige Achsen (22) von Laufradanordnungen der beiden Kettenlaufwerke (3) gelagert sind.

2. Ziviles Kettenfahrzeug nach Anspruch 1, **dadurch gekennzeichnet, dass** ein gemeinsames Trägerhohlprofil (20) zur Integration von Antriebskomponenten von Antriebsrädern (7) der beiden Kettenlaufwerke (3) vorgesehen ist, das sich über eine Breite der Tragwanne (2) erstreckt und gegenüberliegende Seitenwandungen der Tragwanne (2) durchsetzt.

3. Ziviles Kettenfahrzeug nach Anspruch 1 oder 2, **dadurch gekennzeichnet, dass** gegenüberliegende Seitenwandungen der Tragwanne (2) mit Durchtritten versehen sind, durch die die Rohrprofile (19) oder das gemeinsame Trägerhohlprofil (20) hindurchragen, und dass die Durchtritte an ihren umlaufenden Randbereichen durchgängig und dicht mit umlaufenden Außenmantelbereichen der Rohrprofile (19) oder des Trägerhohlprofils (20) verschweißt sind.

4. Ziviles Kettenfahrzeug nach einem der vorhergehenden Ansprüche, **dadurch gekennzeichnet**, das an einem front- und/oder heckseitigen Stirnendbereich der Tragwanne (2) wenigstens ein Schiffsantrieb (13) vorgesehen ist.

5. Ziviles Kettenfahrzeug nach Anspruch 4, **dadurch gekennzeichnet, dass** in der Tragwanne (2) wenigstens eine Lenzpumpeneinrichtung (18) integriert ist.

6. Ziviles Kettenfahrzeug nach einem der vorhergehenden Ansprüche, **dadurch gekennzeichnet, dass** eine Schwimmfunktionsstruktur (10) lösbar mit der Tragwanne (2) verbunden ist, die mehrere, über eine Länge und eine Breite der Schwimmfunktionsstruktur (10) verteilt angeordnete Auftriebskörper (12) aufweist.

7. Ziviles Kettenfahrzeug nach Anspruch 6, **dadurch gekennzeichnet, dass** die Schwimmfunktionsstruktur (10) auf eine Oberseite der Tragwanne (2) aufgesetzt ist.

8. Ziviles Kettenfahrzeug nach Anspruch 6 oder 7, **dadurch gekennzeichnet, dass** die Schwimmfunktionsstruktur (10) einen Strukturrahmen (11) aufweist, an dem die Auftriebskörper (12) befestigt sind.

9. Ziviles Kettenfahrzeug nach einem der Ansprüche 6 bis 8, **dadurch gekennzeichnet, dass** die Auftriebskörper (12) die Kettenlaufwerke (3) außenseitig flankieren.

10. Ziviles Kettenfahrzeug nach einem der Ansprüche 6 bis 9, **dadurch gekennzeichnet, dass** die Auftriebskörper (12) zumindest abschnittsweise quer über die Kettenlaufwerke (3) erstreckt sind.

11. Ziviles Kettenfahrzeug nach einem der vorhergehenden Ansprüche, **dadurch gekennzeichnet, dass** an der Tragwanne frontseitig eine Bergewinde vorgesehen ist.

12. Ziviles Kettenfahrzeug nach Anspruch 4, **dadurch gekennzeichnet, dass** einem Fahrerplatz in dem Fahrerhaus (4) Steuerelemente (15) zur Steuerung des wenigstens einen Schiffsantriebs (13) zugeordnet sind.

13. Ziviles Kettenfahrzeug nach einem der vorhergehenden Ansprüche, **dadurch gekennzeichnet, dass** die Tragwanne (2) mit mehreren, in Querrichtung erstreckten Schottwänden (23) versehen ist.

14. Ziviles Kettenfahrzeug nach einem der vorhergehenden Ansprüche, **dadurch gekennzeichnet, dass** die Laufräder (9) jedes Kettenlaufwerks (3) paarweise an Zwillingslenkern (21) gelagert sind, deren Lenkerhebel relativ zu einer gemeinsamen Laufradachse (22) unterschiedlich lang ausgeführt sind.

## Claims

1. Civilian tracked vehicle having a supporting frame and a chain chassis which includes two chain mechanisms (3) on opposite sides of the supporting frame, having a traction drive unit supported by the supporting frame, and having a driver's cab (4) arranged on the supporting frame, wherein the supporting frame is designed as a watertight supporting trough (2) in which the traction drive unit is accommodated,
**characterized in that**
the supporting trough (2) has at least two tube profiles (19) traversing the supporting trough (2) transversely, in which continuous axles (22) of running wheel arrangements of the two chain mechanisms (3) are mounted.

2. Civilian tracked vehicle according to claim 1, **characterized in that** a common support hollow profile (20) for the integration of drive components of drive wheels (7) of the two chain mechanisms (3) are provided, which support hollow profile extends across a width of the supporting trough (2) and traverses opposite lateral walls of the supporting trough (2).

3. Civilian tracked vehicle according to claim 1 or 2, **characterized in that** opposite lateral walls of the supporting trough (2) are provided with passages, through which passages the tube profiles (19) or the common support hollow profile (20) project, and **in that** the passages are welded, on their circumferential edge regions, consistently and tightly with circumferential outer shell regions of the tube profiles (19) or the support hollow profile (20).

4. Civilian tracked vehicle according to any one of the preceding claims, **characterized in that** on a front-sided and/or rear-sided face end region of the supporting trough (2) at least one ship propulsion (13) is provided.

5. Civilian tracked vehicle according to claim 4, **characterized in that** in the supporting trough (2) at least one bilge pump device (18) is integrated.

6. Civilian tracked vehicle according to any one of the preceding claims, **characterized in that** a floating function structure (10) is detachably connected to the supporting trough (2), which structure includes a plurality of floaters (12) distributed across a length and a width of the floating function structure (10).

7. Civilian tracked vehicle according to claim 6, **characterized in that** the floating function structure (10) is placed on an upper side of the supporting trough (2).

8. Civilian tracked vehicle according to claim 6 or 7, **characterized in that** the floating function structure (10) includes a structural frame (11) to which the floaters (12) are attached.

9. Civilian tracked vehicle according to any one of the claims 6 to 8, **characterized in that** the floaters (12) flank the chain mechanisms (3) on the outer side.

10. Civilian tracked vehicle according to any one of the claims 6 to 9, **characterized in that** the floaters (12) extend at least partially transversely across the chain mechanisms (3).

11. Civilian tracked vehicle according to any one of the preceding claims, **characterized in that** a recovery winch is provided on the front side of the supporting trough.

12. Civilian tracked vehicle according to claim 4, **characterized in that** control elements (15) for controlling the at least one ship propulsion (13) are associated with a driver's seat in the driver's cab (4).

13. Civilian tracked vehicle according to any one of the preceding claims, **characterized in that** the supporting trough (2) is provided with a plurality of bulkhead partitions (23) extending in the transverse direction.

14. Civilian tracked vehicle according to any one of the preceding claims, **characterized in that** the running wheels (9) of each of the chain mechanisms (3) are mounted in pairs on twin steering devices (21), with the steering levers thereof having different lengths relative to a common running wheel axle (22).

## Revendications

1. Véhicule à chenilles civil avec un cadre porteur, ainsi qu'avec un châssis à chenilles présentant deux trains de roulement à chenilles (3) sur côtés opposés du cadre porteur, avec une unité d'entraînement de roulement supportée par le cadre porteur, ainsi qu'avec une cabine du conducteur (4) arrangée sur le cadre porteur, le cadre porteur étant conçu sous forme de carter de support (2) étanche à l'eau, dans lequel l'unité d'entraînement de roulement est placée,
**caractérisé en ce que**
le carter de support (2) présente au moins deux profilés tubulaires (19) traversant le carter de support (2) transversalement, dans lesquels des axes (22) en continue d'arrangements de roues de roulement des deux trains de roulement à chenilles (3) sont montés.

2. Véhicule à chenilles civil selon la revendication 1, **caractérisé en ce qu'**un profilé creux de support (20) pour l'intégration de composants de transmission de roues motrices (7) des deux trains de roulement à chenilles (3) est prévu, le profilé creux de support s'étendant au travers d'une largeur du carter de support (2) et traversant parois latérales opposées du carter de support (2).

3. Véhicule à chenilles civil selon la revendication 1 ou 2, **caractérisé en ce que** des parois latérales opposées du carter de support (2) sont prévues de passages, au travers desquels les profilés tubulaires (19) ou le profilé creux de support (20) commun dépassent, et **en ce que** les passages sont soudés, sur leurs zones marginales circonférentielles, constamment et étanchement à des régions d'enveloppe extérieure circonférentielles des profilés tubulaires (19) ou du profilé creux de support (20).

4. Véhicule à chenilles civil selon l'une quelconque des revendications précédentes, **caractérisé en ce que** sur une zone d'extrémité frontale côté avant et/ou côté arrière du carter de support (2) est prévu au moins une propulsion de bateau (13).

5. Véhicule à chenilles civil selon la revendication 4, **caractérisé en ce que** dans le carter de support (2) est intégré au moins un dispositif de pompe de cale (18).

6. Véhicule à chenilles civil selon l'une quelconque des revendications précédentes, **caractérisé en ce qu'**une structure de fonction flottante (10) est reliée de façon détachable au carter de support (2), ladite structure présentant une pluralité de flotteurs (12) répartis sur une longueur et une largeur de la structure de fonction flottante (10).

7. Véhicule à chenilles civil selon la revendication 6, **caractérisé en ce que** la structure de fonction flottante (10) est placée sur un côté supérieur du carter de support (2).

8. Véhicule à chenilles civil selon la revendication 6 ou 7, **caractérisé en ce que** la structure de fonction flottante (10) présente un cadre de structure (11) sur lequel les flotteurs (12) sont fixés.

9. Véhicule à chenilles civil selon l'une quelconque des revendications 6 à 8, **caractérisé en ce que** les flotteurs (12) encadrent les trains de roulement à chenilles (3) sur le côté extérieur.

10. Véhicule à chenilles civil selon l'une quelconque des revendications 6 à 9, **caractérisé en ce que** les flotteurs (12) s'étendent transversalement au travers des trains de roulement à chenilles (3) au moins partiellement.

11. Véhicule à chenilles civil selon l'une quelconque des revendications précédentes, **caractérisé en ce qu'**un treuil de récupération est pourvu sur le côté frontal du carter de support.

12. Véhicule à chenilles civil selon la revendication 4, **caractérisé en ce que** des éléments de commande (15) sont associés à un siège de conducteur dans la cabine du conducteur (4) pour commander l'au moins une propulsion de bateau (13).

13. Véhicule à chenilles civil selon l'une quelconque des revendications précédentes, **caractérisé en ce que** le carter de support (2) est prévu d'une pluralité de cloisons de séparation (23) s'étendant dans la direction transversale.

14. Véhicule à chenilles civil selon l'une quelconque des revendications précédentes, **caractérisé en ce que** les roues de roulement (9) de chacun des trains de roulement à chenilles (3) sont montées par paires sur conduites doubles (21), les leviers de direction étant des longueurs différentes par rapport à un axe de roue de roulement (22) commun.
